# EUROPÄISCHE PATENTSCHRIFT

(11) **EP 1 041 331 B1**
(45) Veröffentlichungstag und Bekanntmachung des Hinweises auf die Patenterteilung: **29.10.2003**
(21) Anmeldenummer: 00102895.0
(22) Anmeldetag: 12.02.2000
(51) Int. Cl.: F16L 33/26, F16L 33/207, F16L 33/01, F16L 33/22

(54) **Anschlusselement für einen Verbundschlauch und Verfahren zum Anschliessen eines Verbundschlauchs**
Connecting element for a composite pipe and method of connecting a composite pipe
Elément de raccordement pour un tuyau composite et procédé pour raccorder un tuyau composite

(30) Priorität: 27.03.1999 DE 19914061
(43) Veröffentlichungstag der Anmeldung: 04.10.2000
(73) Patentinhaber: Witzenmann GmbH, 75175 Pforzheim (DE)
(72) Erfinder: Schüttler, Peter, 75223 Niefern-Öschelbronn (DE); Winter, Armin, 75181 Prorzheim (DE)
(74) Vertreter: Kaiser, Magnus, Dipl.-Phys.

(56) Entgegenhaltungen:
- FR-E- 67 525
- US-A- 3 381 981
- US-A- 3 393 267
- US-A- 3 964 772
- US-A- 4 000 918
- US-A- 5 233 739

## Beschreibung

Die Erfindung betrifft ein Anschlußelement für einen Verbundschlauch mit einem schraubengangförmig gewickelten Metallschlauch und einer elastischen Außenhülle nach dem Oberbegriff des beigefügten Patentanspruchs 1, sowie ein Verfahren zum Anschließen eines solchen Verbundschlauchs nach dem Oberbegriff des beigefügten Anspruchs 7.

Verbundschläuche mit innenliegendem Metallschlauch werden oft bei Hochdruckleitungen eingesetzt, die nicht nur einem hohen Innendruck, sondern auch einem hohen Außendruck bei geringem Innendruck standhalten müssen.

Ein wichtiges Anwendungsgebiet solcher Verbundschläuche liegt bei Unterseebohrungen, beispielsweise submarinen Erdöl- oder Erdgasbohrungen. Hier werden üblicherweise Leitungen verlegt, die ein ganzes Bündel von verschieden beaufschlagten Schläuchen und Leitungen zusammenfassen (sogenannte Umbilicals). Beispielsweise werden gefördertes Öl aus der Ölbohrung heraus, und gleichzeitig Suspension, Ethanol oder Fördergas in die Ölbohrung hinein geleitet. Außerdem verlaufen in Umbilical-Leitungen in der Regel auch elektrische Leitungen für die Steuerung der Bohrvorrichtung.

Da solche Umbilical-Leitungen üblicherweise zwischen einer Bohrinsel und der am Meeresboden befindlichen Ölbohrung verlegt werden, sind die Anforderungen an die Außenhülle, aber auch an die einzelnen darin verlaufenden Leitungen hoch: Die Leitungen müssen flexibel sein, was im allgemeinen nur durch Schlauchleitungen gewährleistet wird, und sie müssen gleichzeitig einem hohen Außendruck standhalten, und zwar unabhängig davon, ob ein Innendruck gleicher Größenordnung oder nur ein vernachlässigbarer Innendruck vorliegt. Je nach Tiefe der Bohrung kann ohne weiteres eine Druckdifferenz von etwa 300 bar entstehen, die nicht zu einem Kollaps der Schlauchleitungen führen darf. Des weiteren müssen die Leitungen so beschaffen sein, daß sie im aggressiven Salzwasser nicht korrodieren.

Ein Verbundschlauch der eingangs genannten Art, bei dem der schraubengangförmig gewickelte Metallschlauch aus Edelstahl und die Außenhülle aus einem Thermoplast bestehen, wird diesen Anforderungen im allgemeinen gerecht.

Problematisch ist die Anbindung solcher Verbundschläuche an Anschlußarmaturen oder an Schlauchkupplungen, da insbesondere im submarinen Einsatz das Salzwasser wegen Korrosionsgefahr nicht am innenliegenden, gewickelten Metallschlauch angreifen darf. Gleichzeitig muß die Anbindung sowohl nach innen als auch nach außen druckfest sein. Auch eine gewisse Zugfestigkeit der Anbindung ist unerläßlich. Diese Problematik besteht durchaus nicht nur bei der äußeren Umhüllung eines Umbilical-Schlauchs, sondern auch bei der Anbindung der einzelnen darin geführten Schläuche, welche in der Regel ebenfalls Verbundschläuche der eingangs genannten Art sind.

Erschwerend kommt hinzu, daß die Anfertigung solcher Anschlüsse oft vor Ort und teilweise unter erschwerten Bedingungen erfolgen muß, beispielsweise auf hoher See, weshalb eine Schweiß- oder Lötverbindung dann kaum oder gar nicht herstellbar ist.

In der US 3 393 267 ist in anderem Zusammenhang ein Anschlußelement für einen Verbundschlauch mit einem schraubengangförmig gewickelten Metallschlauch und einer elastischen Außenhülle vorgeschlagen worden, der eine Tülle mit einem dem Metallschlauch angepaßten, in die gewendelten Vertiefungen von dessen Innenwandung eingreifenden Außengewinde und einer davon abgesetzten, umlaufenden radialen Dichtfläche umfaßt.

Die Tülle dieses bekannten Anschlußelements wird auf das anzuschließende Ende des Verbundschlauchs aufgesetzt, und der gewickelte Metallschlauch wird auf das Außengewinde der Tülle aufgeschraubt. Festgelegt wird der Verbundschlauch mittels einer auf das Anschlußelement aufzusetzenden Schraubhülse, in die ein separater Dichtring eingesetzt wird. Dieser Dichtring verformt sich beim Festdrehen der Hülse derart, daß der Verbundschlauch radial auf die Tülle gepreßt und gleichzeitig die radiale Dichtfläche vom Dichtring in axialer Richtung abdichtend überdeckt wird. Das Außengewinde der Tülle hat die alleinige Aufgabe, das anzuschließende Ende des gewickelten Metallschlauchs zu strecken und so sicherzustellen, daß die elastische Außenhülle in keinem Fall so weit über das Ende des Metallschlauchs überstehen kann, daß sie auf die Dichtfläche aufläuft.

Für Anwendungen, die eine Anbindung von Verbundschläuchen an Anschlußarmaturen oder Schlauchkupplungen unter hohen Druckdifferenzen und hohen Dichtheitsanforderungen erfordern, gibt es beim Stand der Technik nach der US 3 393 267 allerdings ungelöste Probleme: Das Strekken des gewickelten Metallschlauchs durch das Außengewinde des bekannten Anschlußelements erfolgt unter Verformung der Wicklungen. Auch das radiale Verpressen zum Festlegen des Verbundschlauchs an diesem Anschlußelement birgt die Gefahr, daß die Wicklungen des Metallschlauchs zusätzlich verformt werden. Diese Verformungen können darin resultieren, daß sich scharfe Kanten der einzelnen Wicklungen ausbilden, die die Außenhülle möglicherweise durchstoßen und so die Dichtwirkung zerstören. Des weiteren können verformte Wicklungen hohen Drücken, insbesondere von außen, nicht mehr Stand halten, so daß die Gefahr besteht, daß der Verbundschlauch im Bereich des Anschlußelements kollabiert. Schließlich bieten die Wicklungen des Metallschlauchs zumindest dann keine definierte Gegenkraft gegen die Verpressung mehr, wenn sie sich verformen, der radialen Preßkraft also nachgeben; eine hochdrucksichere Abdichtung am Anschlußelement ist dann nicht mehr gewährleistet.

Der Erfindung liegt daher die Aufgabe zugrunde, ein Anschlußelement und ein entsprechendes Verfahren vorzuschlagen, mit dem ein Verbundschlauch der eingangs genannten Art löt- und schweißfrei, aber dennoch stabil, unter definierten Bedingungen, dicht und insbesondere hochdruckfest an eine Armatur oder ein Kupplungsteil angeschlossen werden kann.

Diese Aufgabe ist durch ein Anschlußelement mit den Merkmalen des beigefügten Patentanspruchs 1 und durch ein Verfahren mit den Merkmalen des beigefügten Patenanspruchs 7 gelöst.

Vorteilhafte Ausgestaltungen des erfindungsgemäßen Anschlußelements ergeben sich aus den Ansprüchen 2 bis 6.

Bevorzugte Weiterbildungen des erfindungsgemäßen Verfahrens sind in den Ansprüchen 8 bis 11 niedergelegt.

Gemäß der Erfindung umfaßt ein Anschlußelement für einen Verbundschlauch der eingangs genannten Art also nicht nur eine Tülle mit einem dem Metallschlauch angepaßten, in die gewendelten Vertiefungen von dessen Innenwandung eingreifenden Außengewinde und eine an das Außengewinde angrenzende, von dieser durch eine Schulter abgesetzte, der Außenhülle angepaßte, umlaufende axiale Dichtfläche, sondern auch ein ausschließlich im Bereich der Dichtfläche radial auf die Tülle einwirkendes Preßelement zum rundum abdichtenden Festlegen der Außenhülle auf der Dichtfläche.

Mit einem solchen Anschlußelement kann nach dem erfindungsgemäßen Verfahren gearbeitet werden: Das anzuschließende Ende des Verbundschlauchs wird ohne vorherige Präparierung auf die Tülle gesetzt. Das Außengewinde der Tülle ist dem innenliegenden, gewickelten Metallschlauch angepaßt und greift in die gewendelten Vertiefungen von dessen Innenwandung ein, ohne ihn zu verformen. Daher kann der Verbundschlauch vermittels seines Metallschlauches in einfacher Weise auf die Tülle aufgeschraubt und so zugfest auf ihr festgelegt werden. Danach wird der gewikkelte Metallschlauch, und nur dieser, gestaucht, so daß die Außenhülle über das Ende des Metallschlauchs überstehend freigelegt wird. Hierdurch übergreift die Außenhülle das Ende des Metallschlauchs und das Außengewinde der Tülle, auf welchem dieser festgelegt ist, und kann ihrerseits auf einer axial hinter dem Außengewinde angeordneten Dichtfläche druckdicht festgelegt werden. Mit dieser Konstruktion kann verhindert werden, daß der innenliegende Metallschlauch mit dem umgebenden Medium in Kontakt kommt, obgleich er druck- und zugfest am Anschlußelement schweiß- und lötlos befestigt ist. Das Festlegen der Außenhülle auf der Dichtfläche erfolgt mittels radialer Verpressung. Insbesondere hier bietet die Erfindung besondere Vorteile, da die Verpressung nur die Außenhülle des Verbundschlauchs, aber nicht den gewickelten Metallschlauch betrifft; denn durch eine Verpressung des gewickelten Metallschlauchs würde dessen Profil möglicherweise deformiert werden und dadurch seine Druckfestigkeit, insbesondere seine Widerstandsfähigkeit gegen ein Einknicken, stark vermindert. Da lediglich die Außenhülle auf der axialen Dichtfläche verpreßt wird und der gewickelte Metallschlauch von radialen Verpreßkräften völlig frei bleibt, sind die oben geschilderten Probleme des bisherigen Standes der Technik eliminiert. Die Funktionen "Zugfestigkeit" und "Dichtheit" des erfindungsgemäßen Anschlußelements sind vollständig getrennt: Der gewickelte Metallschlauch übernimmt die Zugfestigkeit der Anbindung ohne Gefährdung seiner Querdruckfestigkeit, und die Außenhülle des Verbundschlauchs sorgt für die Dichtheit, wobei die Verpressung auf der axialen Dichtfläche unter definierten und reproduzierbaren Bedingungen erfolgt. Hierbei kann die Dichtungswirkung durch entsprechende Profilierung der axialen Dichtfläche, beispielsweise durch eine Anzahl von umlaufenden Ringnuten oder Ausnehmungen verbessert werden. Korrespondierende Zähne oder ringförmige Vorsprünge im Preßelement, das die radiale Preßkraft aufbringt, kann die Dichtwirkung dann noch erhöhen.

Das erfindungsgemäße Verfahren zum Anschließen von Verbundschläuchen kann an jeder beliebigen Stelle eines Verbundschlauches durchgeführt werden, indem dieser an der gewünschten Stelle einfach in einer radialen Ebene abgelängt wird, beispielsweise mit einer Säge. Nach dem Verschrauben des innenliegenden Metallschlauchs mit der Tülle kann die Stauchung des Metallschlauchs durch (gegebenenfalls stoßweises) Einschieben der Tülle in die Außenhülle des Verbundschlauchs erfolgen. Anschließend muß nur noch die Außenhülle auf der Dichtfläche, vorzugsweise mittels einer Preßhülse, festgelegt werden, um den Anschluß des Verbundschlauchs an eine Anschlußarmatur oder eine Schlauchkupplung zu vervollständigen.

Neben dem Festlegen der Außenhülle mittels einer Preßhülse kann die Außenhülle auch in einen sich zum Verbundschlauch hin öffnenden Ringraum eingesteckt und dort beispielsweise ebenfalls durch Verpressen festgelegt werden. Die erfindungsgemäße Dichtfläche ist dann Teil des Ringraums.

Die Funktionsfähigkeit eines erfindungsgemäßen Anschlußelements wird noch verbessert, wenn das Außengewinde der Tülle zur Dichtfläche hin von einem Anschlag begrenzt wird, der vorzugsweise als ringförmig umlaufende Stirnfläche ausgebildet ist. Hierdurch wird das Aufschrauben des gewickelten Metallschlauchs zum einen definiert begrenzt; zum anderen kann der Anschlag einen Teil der Kräfte übernehmen, wenn die Stauchung des Metallschlauchs über die Tülle erfolgt.

Der schraubengangförmig gewickelte Metallschlauch besteht vorzugsweise aus gefalzten Metallprofilen, wobei diese wiederum bevorzugt als Agraffprofile ausgebildet sind. Agraffprofile sind bekanntermaßen bei guter Flexibilität metallisch dichtend, sehr hoch druckbelastbar sowie axial stauchund reckbar. Vor allem die hier besonders interessierende Außendruckfestigkeit wird durch ein Agraffprofil gewährleistet.

Die Außenhülle des Verbundschlauchs ist bevorzugt aus Kunststoff gefertigt, insbesondere aus einem Thermoplasten. Die Außenhülle kann jedoch durchaus aus mehreren Lagen des gleichen oder auch unterschiedlichen Materials bestehen, um dessen Widerstandsfähigkeit zu erhöhen oder gegebenenfalls eine Abschirmung zu gewährleisten.

Die Erfindung kann sowohl beim Anschließen von einzelnen Verbundschläuchen, die beispielsweise innerhalb einer Umbilical-Schlauchleitung verlaufen, eingesetzt werden, aber durchaus auch zum Anbinden von Verbundschläuchen dienen, die ein ganzes Bündel von einzelnen Schläuchen oder Leitungen in sich führen. Besonders hervorzuheben sind in jedem Fall die Einfachheit der löt- und schweißlosen Montage, die Zugfestigkeit und die Drucksicherheit, insbesondere Außendrucksicherheit des erfindungsgemäßen Anschlusses.

Ein Ausführungsbeispiel eines Anschlußelementes nach der Erfindung wird im folgenden anhand der beigefügten Zeichnungen näher beschrieben und erläutert. Es zeigen:
- Figur 1: eine hälftige, geschnittene Seitenansicht eines erfindungsgemäßen Anschlußelements, in einem ersten Verfahrensschritt;
- Figur 2: eine Darstellung gemäß Figur 1 in einem zweiten Verfahrensschritt;
- Figur 3: eine Darstellung gemäß Figur 1 in einem dritten Verfahrensschritt.

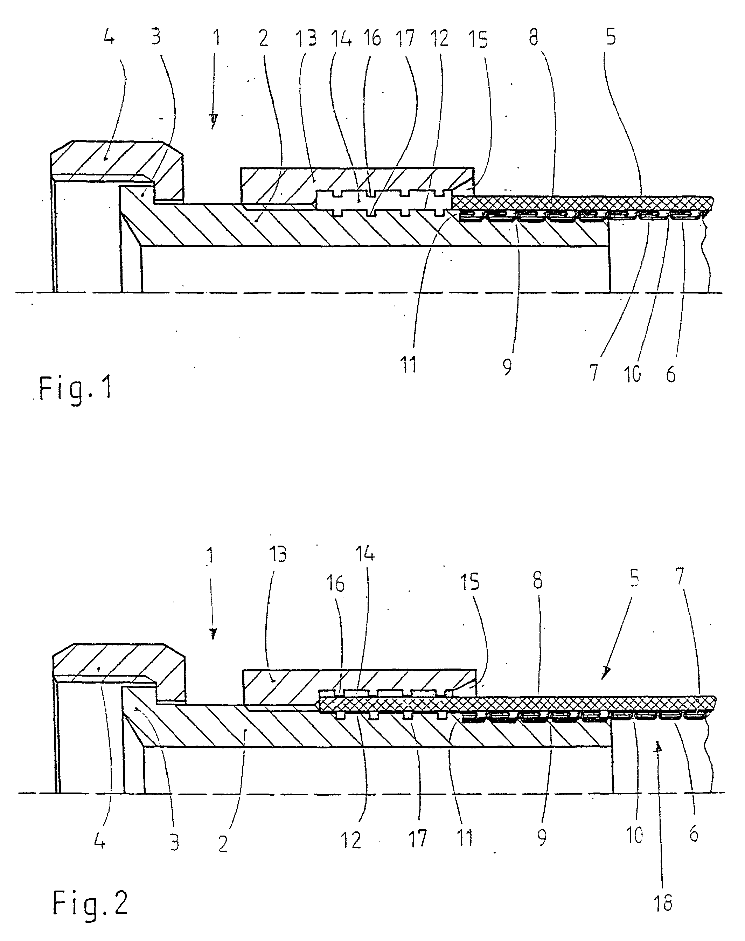

Das in Figur 1 hälftig gezeichnete Anschlußelement 1 besteht im wesentlichen aus einer Tülle 2, die endständig einen Flansch 3 mit zugehöriger Überwurfmutter 4 aufweist. Zum Anschluß eines Verbundschlauchs 5, der hier aus einem schraubengangförmig gewickelten Metallschlauch 6 mit Agraffprofilen 7 und einer diesen Metallschlauch 6 umhüllenden Außenhülle 8 aus einem Elastomer besteht, ist die Tülle 2 an ihrem dem Flansch 3 gegenüberliegenden Ende mit einem Außengewinde 9 versehen. Dieses Außengewinde 9 ist derart gestaltet, daß es in die zwischen den einzelnen Agraffprofilen 7 liegenden Vertiefungen 10 eingreift. Man kann daher von einem Schlauchgewinde sprechen, auf welches der Metallschlauch 6 einfach aufgeschraubt wird. In der Regel wird allerdings die Tülle 2 in den Verbundschlauch 5 hineingeschraubt werden. Das Außengewinde 9 wird von einer als ringförmig umlaufende Stirnfläche ausgebildeten Schulter 11 begrenzt, an die sich eine umlaufende, axiale Dichtfläche 12 anschließt. Auf der Tülle 2 verschraubt sitzt eine Preßhülse 13, die im Zusammenwirken mit der Dichtfläche 12 einen Ringraum 14 bildet, der sich zum Verbundschlauch 5 hin öffnet und dort mit einer Einführschräge 15 versehen ist. Die Preßhülse 13 ist schließlich mit einer Anzahl von Zähnen 16 versehen, die mit Ausnehmungen 17 in der Dichtfläche 12 korrespondieren.

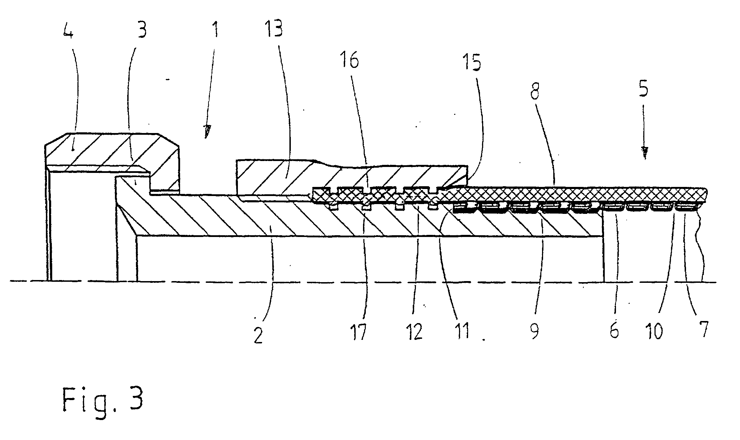

In den Figuren 2 und 3 sind die einzelnen Teile des dargestellten Anschlußelements 1 und des Verbundschlauchs 5 jeweils mit den gleichen Bezugszeichen versehen.

Die dem erfindungsgemäßen Verfahren entsprechende Funktionsweise des dargestellten Anschlußelements 1 ist die folgende:

Figur 1 zeigt die Anordnung mit bereits auf das Anschlußelement 1 bzw. dessen Tülle 2 aufgesetztem Verbundschlauch 5, wobei der gewickelte Metallschlauch 6 bereits auf das Außengewinde 9 der Tülle 2 bis zum Anschlag bzw. der Schulter 11 aufgeschraubt ist. Der Verbundschlauch 5 muß dafür lediglich in einer nahezu radialen Ebene abgetrennt worden sein.

Die Tülle 2 wird sodann in den Verbundschlauch 5 hineingedrückt oder hineingeschlagen, so daß der gewickelte Metallschlauch 6 innerhalb der Außenhülle 8 zurückgeschoben wird. Die Stauchbarkeit des gewickelten Metallschlauchs 6 macht dies möglich. Die Außenhülle 8 wird hierdurch über das Ende des Metallschlauchs 6 überstehend freigelegt und in den Ringraum 14 zwischen der Dichtfläche 12 und der Preßhülse 13 geschoben. Diesen Verfahrensschritt zeigt Figur 2, in welcher ein Stauchbereich 18 des Metallschlauchs 6 zu erkennen ist. Das freigelegte Ende der Außenhülle 8 sitzt hier schon vollständig im Ringraum 14. Da die Preßhülse 13 auf der Tülle 2 verschraubt ist, wird das Einschieben der Tülle 2 in den Verbundschlauch 5 definiert begrenzt.

Die Preßhülse 13 wird daraufhin verpreßt, um die Anbindung des Anschlußelements 1 an den Verbundschlauch 5 zu vervollständigen. Dies ist in Figur 3 dargestellt.

Das vorliegende Ausführungsbeispiel zeigt also eine löt- und schweißfreie Anbindung eines Verbundschlauchs 5 an ein Anschlußelement 1, welches als Anschlußarmatur oder als Schlauchverbindungskupplung dienen kann. Der innenliegende Metallschlauch 6 des Verbundschlauchs 5 ist auf dem Außengewinde 9 der Tülle 2 unter hoher Zugfestigkeit festgelegt. Die Außenhülle 8, die aus einem Thermoplast oder einem Elastomer besteht, ist in dem durch die Dichtfläche 12 und die Preßhülse 13 gebildeten Ringraum 14 druckdicht festgelegt. Die Dichtheit dieser Verbindung wird durch die Zähne 16 und die Ausnehmungen 17 unterstützt. Da die Verpressung der Außenhülle 8 in der Preßhülse 13 vom Außengewinde 9 der Tülle 2 beabstandet erfolgt, ist ein Deformieren des Agraffprofils 7 des Metallschlauchs 6 ausgeschlossen; dessen hohe Widerstandsfähigkeit gegen Außendrücke bleibt daher in vollem Umfang erhalten. Die Dichtheit auch gegen von außen unter hohem Druck anstehenden Medien ist wegen der definierten Preßkraft, die im Zusammenspiel von Dichtfläche 12 und Preßhülse 13 auf die elastische Außenhülle 8 wirkt, reproduzierbar und sicher gewährleistet. Schließlich bleibt der Metallschlauch 6 vom umgebenden Medium sicher getrennt, so daß beispielsweise bei submarinem Einsatz eine Korrosion des Metallschlauchs 6 durch das umgebende Salzwasser nicht zu befürchten ist.

### Bezugszeichenliste

- 1: Anschlußelement
- 2: Tülle
- 3: Flansch
- 4: Überwurfmutter
- 5: Verbundschlauch
- 6: Metallschlauch
- 7: Agraffprofil
- 8: Außenhülle
- 9: Außengewinde
- 10: Vertiefungen
- 11: Schulter
- 12: Dichtfläche
- 13: Preßhülse
- 14: Ringraum
- 15: Einführschräge
- 16: Zähne
- 17: Ausnehmungen
- 18: Stauchbereich

## Patentansprüche

1. Anschlußelement für einen Verbundschlauch mit einem schraubengangförmig gewickelten Metallschlauch (6) und einer elastischen Außenhülle (8), umfassend eine Tülle (2) mit einem dem Metallschlauch (6) angepaßten, in die gewendelten Vertiefungen (10) von dessen Innenwandung eingreifenden Außengewinde (9) und einer an das Außengewinde (9) angrenzenden, von dieser durch eine Schulter (11) abgesetzten, der Innenkontur der Außenhülle (8) angepaßten, umlaufenden axialen Dichtfläche (12),
**dadurch gekennzeichnet,**
**daß** ein ausschließlich im Bereich der Dichtfläche (12) radial auf die Tülle (2) einwirkendes Presselement (13) zum rundum abdichtenden Festlegen der Außenhülle (8) auf der Dichtfläche (12) vorgesehen ist.

2. Anschlußelement nach Anspruch 1,
**dadurch gekennzeichnet,**
**daß** das Presselement (13) als Presshülse ausgebildet ist.

3. Anschlußelement nach Anspruch 2,
**dadurch gekennzeichnet,**
**daß** die Dichtfläche (12) und die Presshülse einen die Außenhülle (8) des Verbundschlauchs (5) passend aufnehmenden Ringraum (14) bilden.

4. Anschlußelement nach einem der Ansprüche 1 bis 3,
**dadurch gekennzeichnet,**
**daß** der schraubengangförmig gewickelte Metallschlauch (6) aus gefalzten Metallprofilen, insbesondere Agraffprofilen besteht.

5. Anschlußelement nach einem der Ansprüche 1 bis 4,
**dadurch gekennzeichnet,**
**daß** die Außenhülle (8) des Verbundschlauchs (5) aus Kunststoff gefertigt ist.

6. Anschlußelement nach einem der Ansprüche 1 bis 5,
**dadurch gekennzeichnet,**
**daß** die Außenhülle (8) des Verbundschlauchs (5) aus mehreren Lagen besteht.

7. Verfahren zum Anschließen eines Verbundschlauchs mit einem von einer elastischen Außenhülle umhüllten, schraubengangförmig gewickelten Metallschlauch, mit den folgenden Verfahrensschritten:
- Aufsetzen des anzuschließenden Endes des Verbundschlauchs auf eine Tülle mit einem dem Metallschlauch angepaßten, in die gewendelten Vertiefungen von dessen Innenwandung eingreifenden Außengewinde;
- Aufschrauben des gewickelten Metallschlauchs auf das Außengewinde der Tülle;
- Festlegen des Verbundschlauchs auf der Tülle durch radiales Verpressen;
**dadurch gekennzeichnet,**
- **daß** der gewickelte Metallschlauch nach dem Aufschrauben auf das Außengewinde der Tülle so gestaucht wird, daß die Außenhülle über das Ende des Metallschlauchs überstehend freigelegt wird und auf einer an das Außengewinde angrenzenden, von dieser durch eine Schulter abgesetzten, der Außenhülle angepaßten, umlaufenden axialen Dichtfläche der Tülle zu liegen kommt;
- und **daß** danach die Außenhülle des Verbundschlauchs ausschließlich auf der axialen Dichtfläche radial abdichtend verpresst wird.

8. Verfahren nach Anspruch 7,
**dadurch gekennzeichnet,**
**daß** das Verpressen mit einer auf der Tülle angeordneten Presshülse durchgeführt wird, welche zusammen mit der Dichtfläche einen die Außenhülle des Verbundschlauchs passend aufnehmenden Ringraum bildet.

9. Verfahren nach einem der Ansprüche 7 oder 8,
**dadurch gekennzeichnet,**
**daß** das Stauchen des gewickelten Metallschlauchs mit Hilfe der Tülle vorgenommen wird.

10. Verfahren nach einem der Ansprüche 7 bis 9,
**dadurch gekennzeichnet,**
**daß** der Verbundschlauch vor dem Aufsetzen auf die Tülle in einer radialen Ebene abgelängt wird.

11. Verfahren nach einem der Ansprüche 7 bis 10,
**dadurch gekennzeichnet,**
**daß** die Außenhülle des Verbundschlauchs druckdicht auf der Dichtfläche festgelegt wird.

## Claims

1. Connecting element for a composite hose with a helically wound metal hose (6) and a resilient outer cover (8), comprising a grommet (2) with an outer thread (9), which is adapted to the metal hose (6) and engages in the helical depressions (10) in the inner wall thereof, and a circumferential axial sealing surface (12) which borders on the outer thread (9), is set off therefrom by a shoulder (11) and is adapted to the internal contour of the outer cover (8), **characterised in that** a pressing element which acts radially on the grommet (2) exclusively in the region of the sealing surface (12) is provided for fixing the outer cover (8) on the sealing surface (12) with all-round sealing.

2. Connecting element as claimed in Claim 1, **characterised in that** the pressing element (13) is constructed as a pressing sleeve.

3. Connecting element as claimed in Claim 2, **characterised in that** the sealing surface (12) and the pressing sleeve form an annular space (14) which receives the outer cover (8) of the composite hose (5) so that it fits.

4. Connecting element as claimed in one of Claims 1 to 3, **characterised in that** the helically wound metal hose (6) is made from folded metal sections, particularly clasp-like profiles.

5. Connecting element as claimed in one of Claims 1 to 4, **characterised in that** the outer cover (8) of the composite hose (5) is made from plastics material.

6. Connecting element as claimed in one of Claims 1 to 5, **characterised in that** the outer cover (8) of the composite hose (5) consists of a plurality of layers.

7. Method of connecting a composite hose to a helically wound metal hose sheathed with a resilient outer cover, with the following method steps:
- placing the end of the composite hose to be connected onto a grommet with an outer thread which is adapted to the metal hose and engages in the helical depressions in the inner wall thereof;
- screwing the would metal hose onto the outer thread of the grommet;
- fixing the composite hose on the grommet by radial pressing;
**characterised in that**
- after the wound metal hose is screwed onto the outer thread of the grommet it is compressed so that the outer cover is exposed projecting beyond the end of the metal hose and comes to rest on a circumferential axial sealing surface of the grommet which borders on the outer thread, is set off therefrom by a shoulder and is adapted to the outer cover;
- and afterwards the outer cover of the composite hose is pressed exclusively on the axial sealing surface with radial sealing.

8. Method as claimed in Claim 7, **characterised in that** the pressing is carried out by a pressing sleeve which is disposed on the grommet and which together with the sealing surface forms an annular space which receives the outer cover of the composite hose so that it fits.

9. Method as claimed in one of Claims 7 or 8, **characterised in that** the compression of the wound metal hose is carried out with the aid of the grommet.

10. Method as claimed in one of Claims 7 to 9, **characterised in that** the composite hose is cut to length in a radial plane before it is placed on the grommet.

11. Method as claimed in one of Claims 7 to 10, **characterised in that** the outer cover of the composite hose is fixed so as to be pressure-tight on the sealing surface.

## Revendications

1. Elément de raccordement pour un tuyau flexible composite avec un tuyau flexible métallique (6) bobiné ou enroulé hélicoïdalement et une gaine extérieure élastique (8), comprenant un fourreau (2) avec un filetage extérieur (9) adapté au tuyau flexible métallique (6), venant en prise dans les renfoncements (10) hélicoïdaux de la paroi intérieure de ce dernier, et une surface d'étanchéité (12) axiale périphérique avoisinant le filetage (9), séparée de ce dernier par un épaulement (11), adaptée au contour intérieur de la gaine extérieure (8),
**caractérisé en ce que**
un élément de serrage (13) agissant radialement sur le fourreau (2), exclusivement dans la zone de la surface d'étanchéité (12), est prévu pour l'application étanchée sur tout le pourtour de la gaine extérieure (8) sur la surface d'étanchéité (12).

2. Elément de raccordement selon la revendication 1,
**caractérisé en ce que**
l'élément de serrage (13) est configuré comme douille de serrage.

3. Elément de raccordement selon la revendication 2,
**caractérisé en ce que**
la surface d'étanchéité (12) et la douille de serrage forment un espace annulaire (14) pour loger exactement la gaine extérieure (8) du tuyau flexible composite (5).

4. Elément de raccordement selon l'une quelconque des revendications 1 à 3,
**caractérisé en ce que**
le tuyau flexible métallique (6) bobiné hélicoïdalement consiste en profilés métalliques pliés, en particulier en profilés d'agrafes.

5. Élément de raccordement selon l'une quelconque des revendications 1 à 4,
**caractérisé en ce que**
la gaine extérieure (8) du tuyau flexible composite (5) est réalisée en matière synthétique.

6. Élément de raccordement selon l'une quelconque des revendications 1 à 5,
**caractérisé en ce que**
la gaine extérieure (8) du tuyau flexible composite (5) consiste en plusieurs couches.

7. Procédé de raccordement d'un tuyau flexible composite avec un tuyau flexible métallique bobiné hélicoïdalement, enveloppé par une gaine extérieure élastique, avec les étapes de procédé suivantes :
- positionnement de l'extrémité à raccorder du tuyau flexible composite sur un fourreau avec un filetage extérieur adapté au tuyau flexible métallique, venant en prise dans les renfoncements hélicoïdaux de la paroi intérieure de ce dernier ;
- vissage du tuyau flexible métallique bobiné sur le filetage extérieur de la douille ;
- fixation du tuyau flexible composite sur la douille par serrage radial ;
**caractérisé en ce que**
- le tuyau flexible métallique bobiné est comprimé après le vissage sur le filetage extérieur de la douille de telle sorte que la gaine extérieure est dégagée en dépassant de l'extrémité du tuyau flexible métallique et vient reposer sur une surface d'étanchéité axiale périphérique du fourreau avoisinant le filetage extérieur, séparée de ce dernier par un épaulement, adaptée à la gaine extérieure ;
- et qu'ensuite la gaine extérieure du tuyau flexible composite est pressée exclusivement sur la surface d'étanchéité axiale pour étancher radialement.

8. Procédé selon la revendication 7,
**caractérisé en ce que**
le serrage est effectué avec une douille de serrage disposée sur le fourreau, laquelle douille forme ensemble avec la surface d'étanchéité un espace annulaire qui loge exactement la gaine extérieure du tuyau flexible composite.

9. Procédé selon l'une quelconque des revendications 7 ou 8,
**caractérisé en ce que**
la compression du tuyau flexible métallique bobiné est effectuée à l'aide du fourreau.

10. Procédé selon l'une quelconque des revendications 7 à 9,
**caractérisé en ce que**
le tuyau flexible composite est tronçonné à la longueur dans un plan radial avant la mise en place sur le fourreau.

11. Procédé selon l'une quelconque des revendications 7 à 10,
**caractérisé en ce que**
la gaine extérieure du tuyau flexible composite est appliquée de façon étanche à la pression sur la surface d'étanchéité.
